(19)

**Europäisches Patentamt**
**European Patent Office**
**Office européen des brevets**

(11)  **EP 3 437 386 B1**

(12)  # EUROPEAN PATENT SPECIFICATION

(45) Date of publication and mention
of the grant of the patent:
**10.04.2024  Bulletin 2024/15**

(21) Application number: **16781959.8**

(22) Date of filing: **30.09.2016**

(51) International Patent Classification (IPC):
*H04W 56/00* ^(2009.01)      *H04W 72/04* ^(2023.01)

(52) Cooperative Patent Classification (CPC):
**H04W 56/0035**

(86) International application number:
**PCT/US2016/054963**

(87) International publication number:
**WO 2017/171928 (05.10.2017 Gazette 2017/40)**

(54) **NETWORK ASSISTED MOBILITY STATUS INDICATION AND TRACKING OF HIGH-SPEED MOBILE SCENARIOS**

NETZWERKUNTERSTÜTZTE MOBILITÄTSSTATUSANZEIGE UND -VERFOLGUNG VON MOBILEN HOCHGESCHWINDIGKEITSSZENARIEN

INDICATION D'ÉTAT DE MOBILITÉ ASSISTÉE PAR RÉSEAU ET SUIVI DE SCÉNARIOS MOBILES À VITESSE ÉLEVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2016  US 201662316731 P**

(43) Date of publication of application:
**06.02.2019  Bulletin 2019/06**

(73) Proprietor: **Apple Inc.**
**Cupertino, CA 95014 (US)**

(72) Inventors:
• **TIAN, Shuang**
  **Santa Clara, California 95054 (US)**
• **HUANG, Rui**
  **Beijing**
  **Heilongjiang 100085 (CN)**
• **TANG, Yang**
  **Pleasanton, California 94588 (US)**

• **YOON, Dae Jung**
  **Santa Clara, California 95051 (US)**

(74) Representative: **Barton, Russell Glen**
**Withers & Rogers LLP**
**2 London Bridge**
**London SE1 9RA (GB)**

(56) References cited:
• **"3rd Generation Partnership Project; Technical Specification Group Radio Access Network; Study on performance enhancements for high speed scenario in LTE (Release 13)", 3GPP STANDARD; 3GPP TR 36.878, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V13.0.0, 7 January 2016 (2016-01-07), pages 1-92, XP051047582, [retrieved on 2016-01-07]**

**Description**

**BACKGROUND**

Wireless mobile communication technology uses various standards and protocols to transmit data between a node (e.g., a transmission station) and a wireless device (e.g., a mobile device). Standards and protocols that use orthogonal frequency-division multiplexing (OFDM) for signal transmission include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems, the node in an Evolved Universal Terrestrial Radio Access Network (E-UTRAN) system is referred to as an eNode B (also commonly denoted as evolved Node Bs, enhanced Node Bs, eNodeBs, or eNBs), which communicates with the wireless device, known as a user equipment (UE). The downlink (DL) transmission can be a communication from the node (e.g., eNodeB) to the wireless device (e.g., UE), and the uplink (UL) transmission can be a communication from the wireless device to the node.

In LTE, data can be transmitted from the eNodeB to the UE via a physical downlink shared channel (PDSCH). A physical uplink control channel (PUCCH) can be used to acknowledge that data was received. Downlink and uplink channels or transmissions can use time-division duplexing (TDD) or frequency-division duplexing (FDD).

The following document is relevant: "3rd Generation Partnership Project; Technical Specification Group Radio Access Network; Study on performance enhancements for high speed scenario in LTE (Release 13)" 7 January 2016.

**BRIEF DESCRIPTION OF THE DRAWINGS**

Features and advantages of the disclosure will be apparent from the detailed description which follows, taken in conjunction with the accompanying drawings, which together illustrate, by way of example, features of the disclosure; and, wherein:

FIG. 1 is a diagram illustrating a scenario in which a UE moving along a trajectory may experience approximately opposite Doppler shifts for signals received from RRHs of an SFN in accordance with an example;
FIG. 2 provides a diagram of an example two-path channel model for a UE that is moving at a high speed in accordance with an example;
FIG. 3 provides an example downlink transmission in HST SFN in accordance with an example;
FIG. 4 provides an example uplink transmission in HST SFN in accordance with an example;
FIG. 5A-5C provides an example received power, delay, and Doppler shifts compared to time in HST SFN in accordance with an example;
FIG. 6 illustrates functionality of User Equipment (UE) in accordance with an example;
FIG. 7 illustrates functionality of cellular base station (e.g., an evolved Node B) in accordance with an example;
FIG. 8 provides an example illustration of a wireless device in accordance with an example;
FIG. 9 provides an example illustration of a user equipment (UE) device, such as a wireless device, a mobile station (MS), a mobile wireless device, a mobile communication device, a tablet, a handset, or other type of wireless device; and
FIG. 10 illustrates a diagram of a node (e.g., eNB and/or a Serving GPRS Support Node) and a wireless device (e.g., UE) in accordance with an example.

Reference will now be made to the exemplary embodiments illustrated and specific language will be used herein to describe the same. It will nevertheless be understood that no limitation of the scope of is thereby intended.

**DETAILED DESCRIPTION**

The essential features of the invention are outlined by the appended independent claims.

An initial overview of technology embodiments is provided below and then specific technology embodiments are described in further detail later. This initial summary is intended to aid readers in understanding the technology more quickly, but is not intended to identify key features or essential features of the technology nor is it intended to limit the scope of the claimed subject matter.

Cellular communication systems are evolving to provide seamless service under various user conditions like indoor, outdoor, and mobile environments. Technologies disclosed focus on the mobile communication mechanisms to enable efficient operation for mobile users and terminals located in vehicles traveling at high speeds, such as automobiles traveling on a highway or high speed trains (HSTs). Providing mobile communications service to mobile devices moving at speeds of up to 350km/h presents challenges with respect to channel estimation.

The Third Generation Partnership Project (3GPP) has recently created a study item (the High-Speed Train (HST) Study Item (SI)) to identify the new challenges that impact system performance in the HST deployment (3GPP Release 13 "LTE performance enhancement under high speed scenario" SI, RP-142307). The HST SI presents a high-speed train scenario in a single frequency network (SFN) wherein a mobile device such as a User Equipment (UE) presumptively has a wireless connection to a single base station, but the actual downlink signals are transmitted concurrently in a SFN manner from multiple remote radio heads (RRHs) deployed along the train railways. Such SFN deployment with RRHs along high speed train railways is mainly used to resolve radio-resource management issues that may happen due to frequent handovers between different cells. In a conventional scenario, a received signal originates from a single transmitter and each channel path is characterized by an independent random Doppler shift with a distribution proportional to the Doppler power spectrum. However, in an HST SFN, channel paths may have approximately opposite Doppler shifts. This is a condition that the legacy UE channel estimator is not designed to accommodate, since the channels from different RRHs may have independent characteristics.

In relation to performance enhancement for high speed scenarios, an HST running at speeds up to 350km/h in a single-frequency network (SFN) may present at least two problems. First, in an SFN, multiple remote radio heads (RRHs) or base stations (BSs) may be deployed along the railway, for example, and a user equipment (UE) on the HST can receive superposed signals of two strong paths from the two nearest RRHs. Current Doppler shift estimation algorithms at a UE tailored for multipath channel models, such as extended vehicular A ("EVA") or Extended Typical Urban ("ETU") channel model, does not accurately fit the two-path HST SFN channel model. This, in turn, can cause another problem that the frequency offset tracking would fail due to the inaccurate Doppler shift estimation, especially when the HST is running at the very middle of two RRHs.

Accordingly, the present technology provides a network-assisted method to allow the RRH or base station to first acquire, through uplink transmission from an HST UE, propagation information of the HST channel, such as power attenuation level, time delay and Doppler shift, as well as the information of the train's mobility status, such as speed, direction and distance to RRHs. The mechanisms of the present embodiments can indicate all, or some, of the information to the UE through downlink transmission. Upon receiving the mobility information, the UE is able to track its movement, improve channel estimation accuracy, and enhance RRM and demodulation throughput performance.

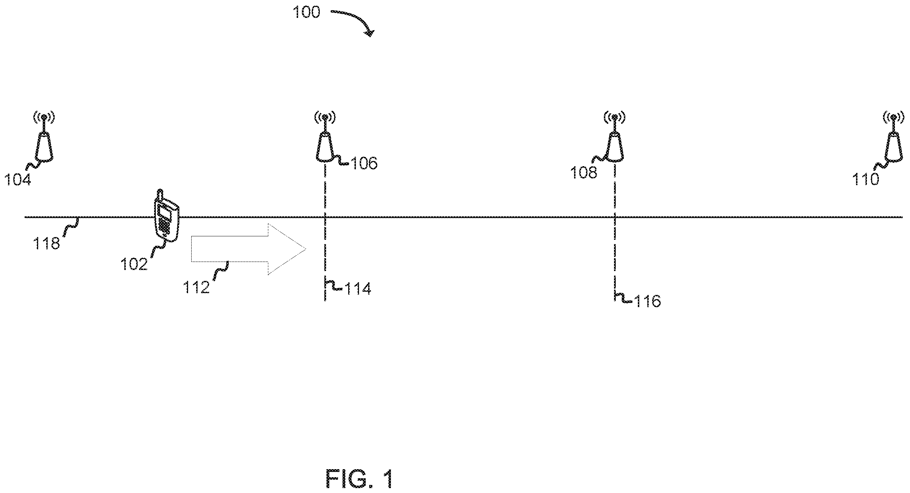

FIG. 1 is a diagram 100 illustrating a scenario in which a UE 102 moving in a direction indicated by the arrow 112 along a trajectory 118 may experience approximately opposite Doppler shifts for signals received from RRHs 104, 106, 108, and 110 of an SFN. When the UE 102 is in the position shown and is moving at a high speed in the direction indicated by the arrow 112, a Doppler shift for a signal from the RRH 104 will be in an approximately opposite direction relative to Doppler shifts for signals from the RRHs 106, 108, and 110. When the UE passes the dashed line 114, Doppler shifts for the signal from the RRHs 104 and 106 will be in an approximately opposite direction relative to Doppler shifts for signals from the RRHs 108 and 110. When the UE passes the dashed line 116, Doppler shifts for the signal from the RRHs 101, 106, and 108 will be in an approximately opposite direction relative to the Doppler shift for the signal from the RRH 110. Hence, at different points along the trajectory 118, estimating separate channel characteristics for each of the RRHs 104, 106, 108, and 110 can be helpful.

Various embodiments of technologies of the present disclosure provide UE signal processing mechanisms to improve HST UE receiver performance. Various embodiments of technologies of the present disclosure can be used to reduce UE implementation complexity for HST applications. Furthermore, various embodiments of technologies of the present disclosure allow reuse of existing channel estimation mechanisms with only slight modifications such that good demodulation performance can be achieved without significant impacts on UE implementation.

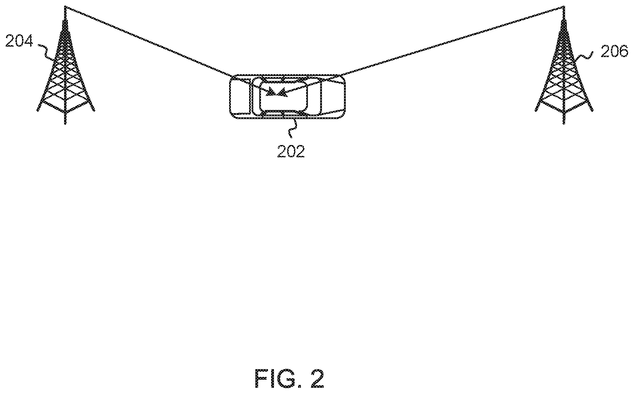

FIG. 2 provides a diagram of an example two-path channel model for a UE that is moving at a high speed. A UE may be located in an automobile 202 that is traveling along a high way between the RRH 204 and the RRH 206 of an SFN that is serving the UE. A simple model of a line of sight (LOS) channel can be depicted with the equations:

$$h_{t=0} = h_1 \cdot e^{j \cdot 2\pi \cdot f_1 \cdot 0} \cdot \delta(\tau - \tau_1) + h_2 \cdot e^{j \cdot 2\pi \cdot f_2 \cdot 0} \cdot \delta(\tau - \tau_2)$$

$$h_{t=\Delta T} = h_1 * e^{-j*2\pi*f_1*\Delta T} * \delta(\tau - \tau_1 + \Delta T) + h_2 * e^{j*2\pi*f_2*\Delta T} * \delta(\tau - \tau_2 - \Delta T)$$

, where $\tau_1$ and $\tau_2$ are arrival timings from RRH 204 and RRH 206, respectively, $f_1, f_2$ are Doppler shifts from the RRH 204 and the RRH 206, respectively, $\Delta T$ is an observation time difference, j is the imaginary number equal to the square root of negative one, e is the base of the natural logarithm, $\pi$ is the ratio of a circle's circumference to the circle's diameter, $\delta$ is the Dirac delta function, $h_t$ is a received signal at a time t, h1 is a received signal from the RRH 204, and h2 is a received signal from the RRH 206. If the automobile 202 is directly in between the RRH 204 and the RRH 206, $f_1 = -f_2$. In other words, in the extreme case, the UE 202 experiences two opposite Doppler shifts from the RRH 204 and the RRH 206.

To the UE 202, a channel to the UE 202 can appear as a superposition of $h_1$ and $h_2$. Legacy channel estimation handles this superposition of signals, though, as a single channel propagation from one transmission point. If the carrier frequency used is 3 gigahertz (GHz) and the automobile 202 were replaced by a high speed train traveling at speed of 350 kilometers per hour (km/h), the Doppler shift would be approximately 800 hertz (Hz) for each of the RRHs 204 and 206. Since the Doppler shifts for the RRHs 204 and 206 are in opposite directions, the Doppler spread between the RRHs 204 and 206 can be up to 1.6 kilohertz (KHz). A Doppler spread of this magnitude is significant if 15 KHz subcarrier spacing is assumed.

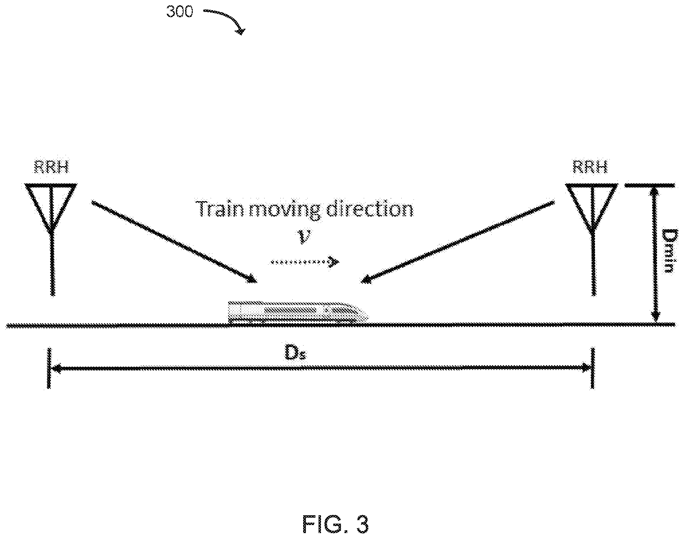

In one aspect, the legacy implementation for the Doppler shift estimation is based on a multipath fading channel model. It is assumed that there are an infinite number of different paths. Each path is characterized by an independently random Doppler shift with a probability density function ("p.d.f") distribution proportional to the Doppler power spectrum. A Doppler shift estimator can try to detect and track the Doppler shift of the strongest path. However, the new HST channel model only consists of two paths with large and approximately opposite Doppler shifts. The mismatch between the two channel models may cause the legacy Doppler shift estimator to be inaccurate to the HST channel model. For example, a detrimental circumstance is when an HST is running around the middle of two RRHs and the two paths are of similar strength, which causes the ambiguity for the UE to abstract the Doppler shift of the stronger path. In addition, it is difficult for the UE to accurately track the sudden change of the Doppler shift due to the swift switch of the stronger path from one RRH 302 (i.e. the RRH to the left of the HST in Fig.3) to another RRH 304 (i.e. the RRH to the right of the HST in Fig.3), as depicted in FIG. 3, illustrating a downlink transmission in HST in an SFN.

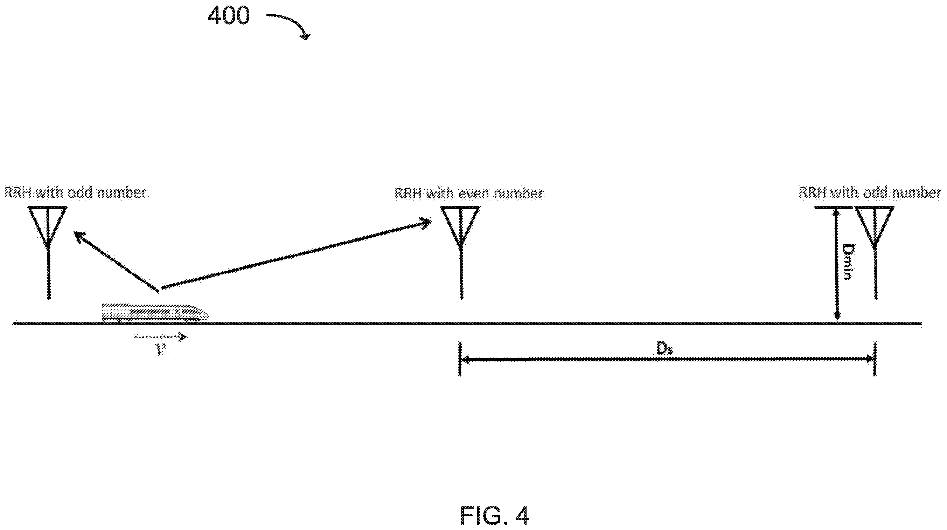

When a train is running along the railway in open field, an uplink channel from the train to one RRH can be modeled as a single-path non-fading channel, as illustrated in FIG. 4, which provides an example uplink transmission in HST in an SFN. Using a channel reciprocity property, the characteristics of the HST two-path downlink channel can be derived by capturing two corresponding single-path uplink channels. The instantaneous channel propagation conditions, such as power attenuation level, time delay and Doppler shift, and a train's mobility status, such as speed, direction and distance to RRHs are predicted and calculated as follows. That is, the two signal paths from two RRHs have approximately opposite Doppler shifts paths.

"$D_s$" denotes the distance (such as a distance measured in meters) between two RRHs. "$D_{min}$" denotes the distance (in meters) from one RRH to the railway. Also, "$v$" denotes the velocity or speed of train (e.g., meters per second "m/s") and "$t$" represents time in seconds and time equals zero ("$t = 0$") when a UE is closest to the leftmost RRH in Fig. 4:

$$D_1(t) = \begin{cases} \sqrt{D_{\min}^2 + (vt)^2}, & 0 < t \leq \dfrac{D_s}{v} \\ \sqrt{D_{\min}^2 + (2D_s - vt)^2}, & \dfrac{D_s}{v} < t \leq \dfrac{2D_s}{v} \\ D_1\left(t \bmod \dfrac{2D_s}{v}\right), & t > \dfrac{2D_s}{v} \end{cases} \qquad (1)$$

$$D_2(t) = D_1\left(t + \frac{D_s}{v}\right) \qquad (2)$$

where D1(t) and D2(t) represents the distance from UE (on the train) to the two nearest RRHs of odd and even number respectively, as depicted in FIG. 4. If the free space attenuation exponent is $\alpha$, the ratio of the two received signals' power, $P_1(t)$ and $P_2(t)$, at the two nearest RRHs may be given by:

$$\frac{P_1(t)}{P_2(t)} = \left(\frac{D_2(t)}{D_1(t)}\right)^{\alpha} \qquad (3)$$

Given "$t = T$", network nodes/RRHs measure and obtain the ratio of received signals' power at the two nearest RRHs, and substitutes Eqs. (1) and (2) into Eq. (3), the network is able to derive a UE/train's position, which can be expressed as "$d_1 = v \cdot T$" meters away from the RRH. Next, the network can measure and obtain the ratio of power for "$t = T + \Delta T$", and derive the new position of UE/train at "$d_2 = v \cdot (T + \Delta T)$". In consequence, the network is able to derive the speed of the train by "$v = (d_2 - d_1) / \Delta T$" and the moving direction of the train is given by the sign of "$v$". Meantime, the delay of each path can be also derived by "Delayi = $D_1(t) / c$" and "Delay$_2$ = $D_2(t) / c$". Moreover, the maximum Doppler shift "$f_{d,\max}$" resulting from the train's movement is given by

$$f_{d,\max} = \frac{f_c}{c} \times v \tag{4}$$

where "$f_c$" is the carrier frequency and "$c$" is the speed of light. Doppler shifts of odd number RRH and even number RRH are given by "$f_{d,1}$" and "$f_{d,2}$" respectively, where

$$f_{d,1} = f_d\left(t + \frac{0.5D_s}{v}\right) \tag{5}$$

$$f_{d,2} = f_d\left(t + \frac{1.5D_s}{v}\right) \tag{6}$$

and

$$\cos\theta(t) = \frac{0.5D_s - vt}{\sqrt{D_{\min}^2 + (0.5D_s - vt)^2}}, \quad 0 \le t \le \frac{D_s}{v}$$

$$\cos\theta(t) = \frac{-1.5D_s + vt}{\sqrt{D_{\min}^2 + (-1.5D_s + vt)^2}}, \quad \frac{D_s}{v} < t \le \frac{2D_s}{v}$$

$$\cos\theta(t) = \cos\theta\left(t \bmod \frac{2D_s}{v}\right), \quad t > \frac{2D_s}{v} \tag{7}$$

Alternatively, the Doppler shift "$f_d$" can be derived based on the frequency offset estimation of the uplink signal. In that case, channel propagation conditions and mobility status information, such as the speed (or velocity) of the train "$v$", can be similarly and reciprocally derived by equations (1) - (6).

Upon receipt of the information regarding the channel propagation conditions and/or high speed train's mobility status, the network/RRH can provide all, or some of, the information to the UE/high speed train through downlink transmission/signaling to help the HST UE track its movement, improve channel estimation accuracy, and enhance RRM and demodulation throughput performance.

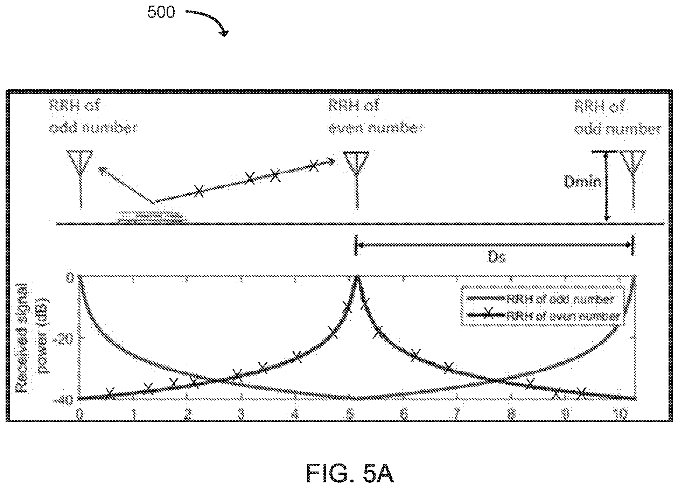

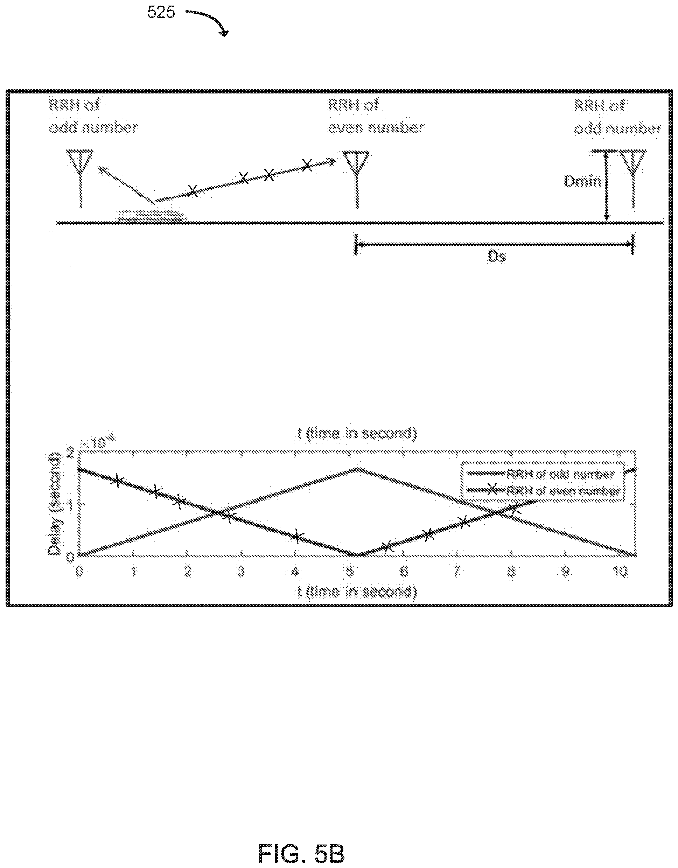

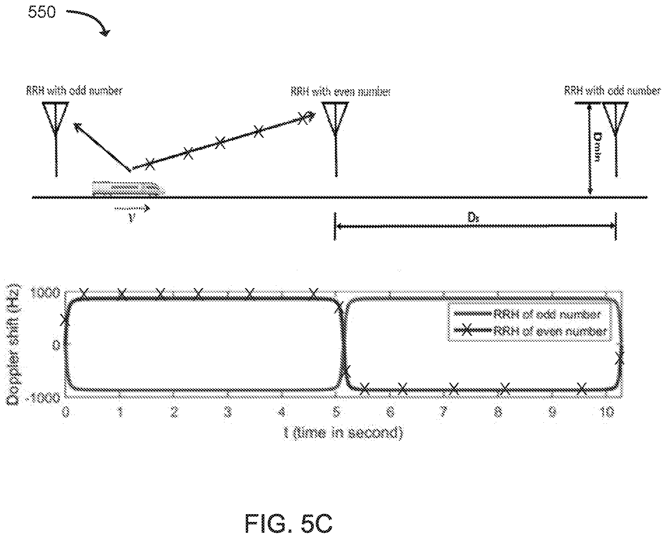

In one example, FIG. 5A-5C provides an example received power, delay, and Doppler shifts compared to time in HST SFN. FIG. 5A illustrates the change of "received signal power (dB)" 500 for both odd number of RRH and even number of RRH, FIG. 5B illustrates a "Delay (s)" 525 for both odd number of RRH and even number of RRH, and FIG. 5C illustrates the "Doppler shift (Hz)" 550 for both odd number of RRH and even number of RRH, with regard to time "t (s)", given "v = 97.22m/s (i.e. 350km/h)", "$D_s$ = 500m", "$D_{\min}$ = 5m" and the instantaneous received power is normalized to the received power when UE is "$D_{\min}$" apart from an RRH. Moreover, the free space attenuation exponent is assumed to be "$\alpha = 2$".

Thus, in one aspect, the mechanisms of the present technology provide a network with the information to enable the network and/or RRH to keep monitoring the uplink transmission signal from the UE, such as, for example, in a HST SFN scenario. From the received uplink signal, the network and/or RRH is able to derive the mobility status of the UE and/or HST, including, but not limited to, the HST's speed, direction and distance to RRHs, as well as propagation information of the HST channel, such as power attenuation level, time delay and Doppler shift. The network and/or RRH can be able to provide all, or some, of the mobility information to the UE and/or HST in downlink transmission/signaling. The network and/or RRH is able to continuously and/or periodically provide channel propagation conditions and mobility status information/indication to UE, to assist the UE to track its movement, improve channel estimation accuracy, and enhance RRM and demodulation throughput performance.

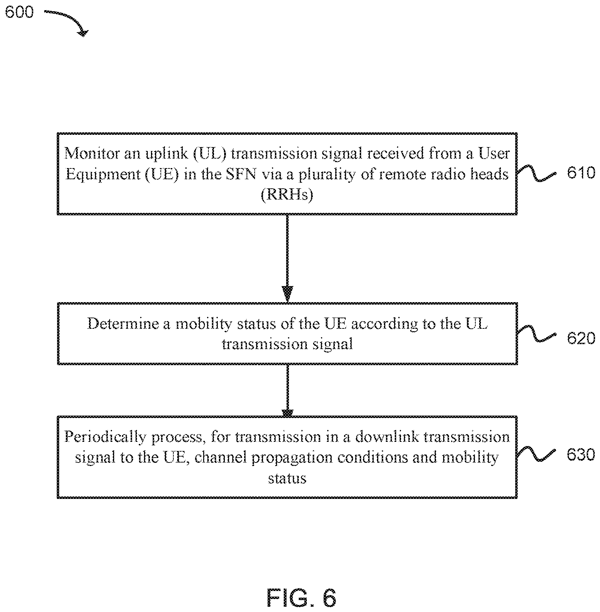

FIG. 6 illustrates functionality 600 of an eNodeB in accordance with an example. The functionality 600 can be implemented as a method or the functionality can be executed as instructions on a machine (e.g., by one or more processors), where the instructions are included on at least one computer-readable storage medium (e.g., a transitory or non-transitory computer-readable storage medium).

As in block 610, the functionality 600 can include monitoring an uplink (UL) transmission signal received from a User Equipment (UE) in the SFN via a plurality of remote radio heads (RRHs). A mobility status of the UE according to the UL transmission signal may be determined, as in block 620. Channel propagation conditions and mobility status may be continuously and/or periodically processed, for transmission to the UE, in a downlink transmission signal, as in block 630.

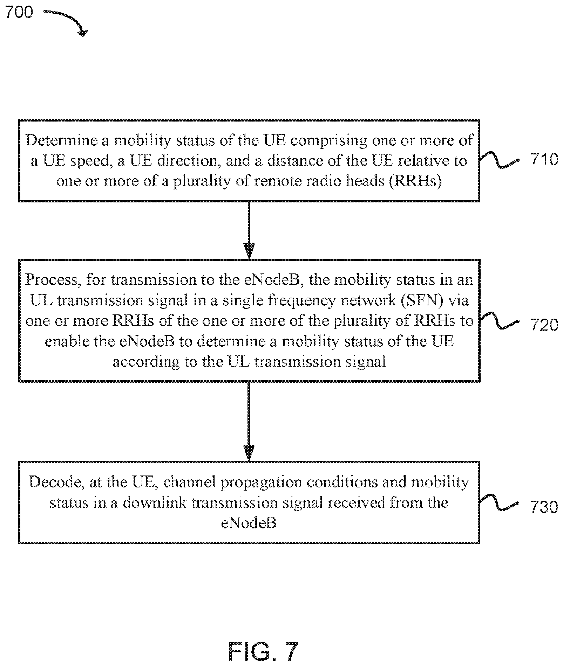

FIG. 7 illustrates functionality 700 of cellular base station (e.g., an evolved Node B) in accordance with an example. The functionality 700 can be implemented as a method or the functionality can be executed as instructions on a machine (e.g., by one or more processors), where the instructions are included on at least one computer-readable storage medium (e.g., a transitory or non-transitory computer-readable storage medium).

As in block 710, the functionality 700 can include determine a mobility status of the UE comprising one or more of a UE speed, a UE direction, and a distance of the UE relative to one or more of a plurality of remote radio heads (RRHs).

The functionality 700 can include process, for transmission to the eNodeB, an uplink (UL) transmission signal in a single frequency network (SFN) via a plurality of remote radio heads (RRHs) to enable the eNodeB to determine a mobility status of the UE according to the UL transmission signal; and

As in block 720, the functionality 700 can include processing, for transmission to the eNodeB, the mobility status in an UL transmission signal in a single frequency network (SFN) via one or more RRHs of the one or more of the plurality of RRHs to enable the eNodeB to determine a mobility status of the UE according to the UL transmission signal. As in block 730, the functionality 700 can include decoding, at the UE, channel propagation conditions and mobility status in a downlink transmission signal received from the eNodeB.

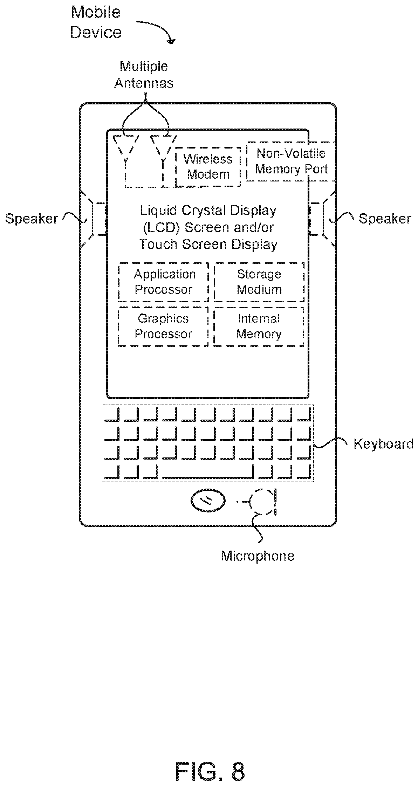

FIG. 8 provides an example illustration of a mobile device, such as a user equipment (UE), a mobile station (MS), a mobile wireless device, a mobile communication device, a tablet, a handset, a CIoT device, or other type of wireless device. The mobile device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The mobile device can be configured to communicate using at least one wireless communication standard such as, but not limited to, 3GPP LTE, WiMAX, High Speed Packet Access (HSPA), Bluetooth, and WiFi. The mobile device can communicate using separate antennas for each wireless communication standard or shared antennas for multiple wireless communication standards. The mobile device can communicate in a wireless local area network (WLAN), a wireless personal area network (WPAN), and/or a WWAN.

The mobile device can also comprise a wireless modem. The wireless modem can comprise, for example, a wireless radio transceiver and baseband circuitry (e.g., a baseband processor). The wireless modem can, in one example, modulate signals that the mobile device transmits via the one or more antennas and demodulate signals that the mobile device receives via the one or more antennas.

The mobile device can include a storage medium. In one aspect, the storage medium can be associated with and/or communication with the application processor, the graphics processor, the display, the non-volatile memory port, and/or internal memory. In one aspect, the application processor and graphics processor are storage mediums.

FIG. 8 also provides an illustration of a microphone and one or more speakers that can be used for audio input and output from the mobile device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the mobile device. A keyboard can be integrated with the mobile device or wirelessly connected to the wireless device to provide additional user input. A virtual keyboard can also be provided using the touch screen.

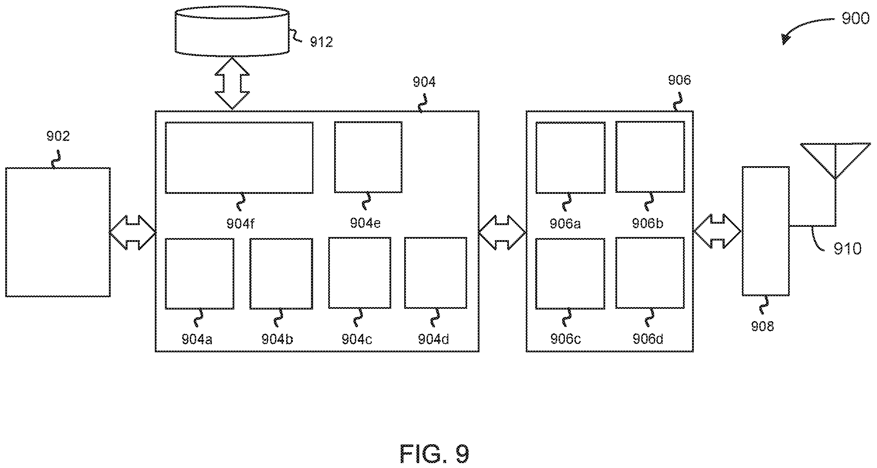

FIG. 9 provides an example illustration of a user equipment (UE) device 900, such as a wireless device, a mobile station (MS), a mobile wireless device, a mobile communication device, a tablet, a handset, a CIoT device, or other type of wireless device. The UE device 900 can include one or more antennas configured to communicate with a node or transmission station, such as a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The UE device 900 can be configured to communicate using at least one wireless communication standard such as, but not limited to, 3GPP LTE, WiMAX, High Speed Packet Access (HSPA), Bluetooth, and WiFi. The UE device 900 can communicate using separate antennas for each wireless communication standard or shared antennas for multiple wireless communication standards. The UE device 900 can communicate in a wireless local area network (WLAN), a wireless personal area network (WPAN), and/or a WWAN.

In some embodiments, the UE device 900 may include application circuitry 902, baseband circuitry 904, Radio Frequency (RF) circuitry 906, front-end module (FEM) circuitry 908 and one or more antennas 910, coupled together at least as shown.

The application circuitry 902 may include one or more application processors. For example, the application circuitry 902 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage (e.g., storage medium 912) and may be configured to execute instructions stored in the memory/storage (e.g., storage medium 912) to enable various applications and/or operating systems to run on the system.

The baseband circuitry 904 may include circuitry such as, but not limited to, one or more single-core or multi-core processors. The baseband circuitry 904 may include one or more baseband processors and/or control logic to process baseband signals received from a receive signal path of the RF circuitry 906 and to generate baseband signals for a transmit signal path of the RF circuitry 906. Baseband processing circuity 904 may interface with the application circuitry 902 for generation and processing of the baseband signals and for controlling operations of the RF circuitry 906. For example, in some embodiments, the baseband circuitry 904 may include a second generation (2G) baseband processor 904a, third generation (3G) baseband processor 904b, fourth generation (4G) baseband processor 904c, and/or other baseband processor(s) 904d for other existing generations, generations in development or to be developed in the future (e.g., fifth generation (5G), 6G, etc.). The baseband circuitry 904 (e.g., one or more of baseband processors 904a-d) may handle various radio control functions that enable communication with one or more radio networks via the RF circuitry 906. The radio control functions may include, but are not limited to, signal modulation/demodulation, encoding/decoding, radio frequency shifting, etc. In some embodiments, modulation/demodulation circuitry of the baseband circuitry 904 may include Fast-Fourier Transform (FFT), precoding, and/or constellation mapping/demapping functionality. In some embodiments, encoding/decoding circuitry of the baseband circuitry 904 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 904 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 904e of the baseband circuitry 904 may be configured to run elements of the protocol stack for signaling of the PHY, MAC, RLC, PDCP and/or RRC layers. In some embodiments, the baseband circuitry may include one or more audio digital signal processor(s) (DSP) 904f. The audio DSP(s) 904f may include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 904 and the application circuitry 902 may be implemented together such as, for example, on a system on a chip (SOC).

In some embodiments, the baseband circuitry 904 may provide for communication compatible with one or more radio technologies. For example, in some embodiments, the baseband circuitry 904 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 904 is configured to support radio communications of more than one wireless protocol may be referred to as multi-mode baseband circuitry.

The RF circuitry 906 may enable communication with wireless networks using modulated electromagnetic radiation through a non-solid medium. In various embodiments, the RF circuitry 906 may include switches, filters, amplifiers, etc. to facilitate the communication with the wireless network. RF circuitry 906 may include a receive signal path which may include circuitry to down-convert RF signals received from the FEM circuitry 908 and provide baseband signals to the baseband circuitry 904. RF circuitry 906 may also include a transmit signal path which may include circuitry to up-convert baseband signals provided by the baseband circuitry 904 and provide RF output signals to the FEM circuitry 908 for transmission.

In some embodiments, the RF circuitry 906 may include a receive signal path and a transmit signal path. The receive signal path of the RF circuitry 906 may include mixer circuitry 906a, amplifier circuitry 906b and filter circuitry 906c. The transmit signal path of the RF circuitry 906 may include filter circuitry 906c and mixer circuitry 906a. RF circuitry 906 may also include synthesizer circuitry 906d for synthesizing a frequency for use by the mixer circuitry 906a of the receive signal path and the transmit signal path. In some embodiments, the mixer circuitry 906a of the receive signal path may be configured to down-convert RF signals received from the FEM circuitry 908 based on the synthesized frequency provided by synthesizer circuitry 906d. The amplifier circuitry 906b may be configured to amplify the down-converted signals and the filter circuitry 906c may be a low-pass filter (LPF) or band-pass filter (BPF) configured to remove unwanted signals from the down-converted signals to generate output baseband signals. Output baseband signals may be provided to the baseband circuitry 904 for further processing. In some embodiments, the output baseband signals may be zero-frequency baseband signals, although other types of baseband signals may be used. In some embodiments, mixer circuitry 906a of the receive signal path may comprise passive mixers, although the scope of the embodiments is not limited in this respect.

In some embodiments, the mixer circuitry 906a of the transmit signal path may be configured to up-convert input baseband signals based on the synthesized frequency provided by the synthesizer circuitry 906d to generate RF output signals for the FEM circuitry 908. The baseband signals may be provided by the baseband circuitry 904 and may be filtered by filter circuitry 906c. The filter circuitry 906c may include a low-pass filter (LPF), although the scope of the embodiments is not limited in this respect.

In some embodiments, the mixer circuitry 906a of the receive signal path and the mixer circuitry 906a of the transmit signal path may include two or more mixers and may be arranged for quadrature down-conversion and/or up-conversion respectively. In some embodiments, the mixer circuitry 906a of the receive signal path and the mixer circuitry 906a of the transmit signal path may include two or more mixers and may be arranged for image rejection (e.g., Hartley image rejection). In some embodiments, the mixer circuitry 906a of the receive signal path and the mixer circuitry 906a may be arranged for direct down-conversion and/or direct up-conversion, respectively. In some embodiments, the mixer circuitry 906a of the receive signal path and the mixer circuitry 906a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 906 may include analog-to-digital converter (ADC) and digital-to-analog converter (DAC) circuitry and the baseband circuitry 904 may include a digital baseband interface to communicate with the RF circuitry 906.

In some dual-mode embodiments, a separate radio IC circuitry may be provided for processing signals for each spectrum, although the scope of the embodiments is not limited in this respect.

In some embodiments, the synthesizer circuitry 906d may be a fractional-N synthesizer or a fractional N/N+1 synthesizer, although the scope of the embodiments is not limited in this respect as other types of frequency synthesizers may be suitable. For example, synthesizer circuitry 906d may be a delta-sigma synthesizer, a frequency multiplier, or a synthesizer comprising a phase-locked loop with a frequency divider.

The synthesizer circuitry 906d may be configured to synthesize an output frequency for use by the mixer circuitry 906a of the RF circuitry 906 based on a frequency input and a divider control input. In some embodiments, the synthesizer circuitry 906d may be a fractional N/N+1 synthesizer.

In some embodiments, frequency input may be provided by a voltage controlled oscillator (VCO), although other types of devices may provide the frequency input. Divider control input may be provided by either the baseband circuitry 904 or the applications processor 902 depending on the desired output frequency. In some embodiments, a divider control input (e.g., N) may be determined from a look-up table based on a channel indicated by the applications processor 902.

Synthesizer circuitry 906d of the RF circuitry 906 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 906d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 906 may include an IQ/polar converter.

FEM circuitry 908 may include a receive signal path which may include circuitry configured to operate on RF signals received from one or more antennas 910, amplify the received signals and provide the amplified versions of the received signals to the RF circuitry 906 for further processing. FEM circuitry 908 may also include a transmit signal path which may include circuitry configured to amplify signals for transmission provided by the RF circuitry 906 for transmission by one or more of the one or more antennas 910.

In some embodiments, the FEM circuitry 908 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 906). The transmit signal path of the FEM circuitry 908 may include a power amplifier (PA) to amplify input RF signals (e.g., provided by RF circuitry 906), and one or more filters to generate RF signals for subsequent transmission (e.g., by one or more of the one or more antennas 910.

In some embodiments, the UE device 900 may include additional elements such as, for example, memory/storage, display (e.g., touch screen), camera, antennas, keyboard, microphone, speakers, sensor, and/or input/output (I/O) interface.

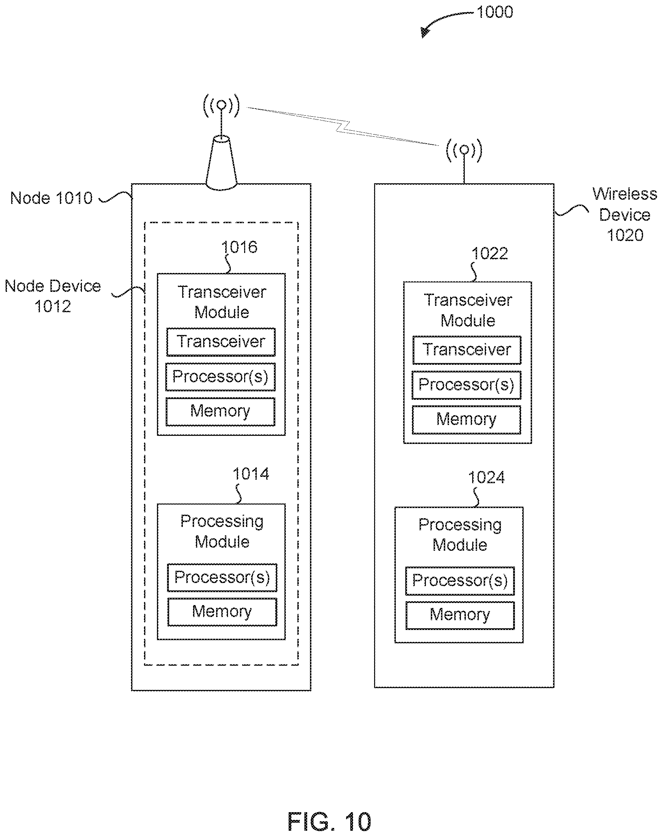

FIG. 10 illustrates a diagram 1000 of a node 1010 (e.g., eNB and/or a Serving GPRS Support Node) and a wireless device 1020 (e.g., UE) in accordance with an example. The node can include a base station (BS), a Node B (NB), an evolved Node B (eNB), a baseband unit (BBU), a remote radio head (RRH), a remote radio equipment (RRE), a remote radio unit (RRU), or a central processing module (CPM). In one aspect, the node can be a Serving GPRS Support Node. The node 1010 can include a node device 1012. The node device 1012 or the node 1010 can be configured to communicate with the wireless device 1020. The node device 1012 can be configured to implement technologies described herein. The node device 1012 can include a processing module 1014 and a transceiver module 1016. In one aspect, the node device 1012 can include the transceiver module 1016 and the processing module 1014 forming a circuitry for the node 1010. In one aspect, the transceiver module 1016 and the processing module 1014 can form a circuitry of the node device 1012. The processing module 1014 can include one or more processors and memory. In one embodiment, the processing module 1022 can include one or more application processors. The transceiver module 1016 can include a transceiver and one or more processors and memory. In some examples, components of the transceiver module 1316 can be included in separate devices. For example, selected components of the transceiver module 1316 may be located in a cloud radio access network (C-RAN). In one embodiment, the transceiver module 1016 can include a baseband processor. In some examples, components of the transceiver module 1016 can be included in separate devices.

The wireless device 1020 can include a transceiver module 1024 and a processing module 1022. The processing module 1022 can include one or more processors and memory. In one embodiment, the processing module 1022 can include one or more application processors. The transceiver module 1024 can include a transceiver and one or more processors and memory. In one embodiment, the transceiver module 1024 can include a baseband processor. The wireless device 1020 can be configured to implement technologies described herein. The node 1010 and the wireless devices 1020 can also include one or more storage mediums, such as the transceiver module 1016, 1024 and/or the processing module 1014, 1022.

Various techniques, or certain aspects or portions thereof, may take the form of program code (i. e., instructions) embodied in tangible media, such as floppy diskettes, compact disc-read-only memory (CD-ROMs), hard drives, transitory or non- transitory computer readable storage mediums, or any other machine-readable storage medium wherein, when the program code is loaded into and executed by a machine, such as a computer, the machine becomes an apparatus for practicing the various techniques. A non-transitory computer readable storage medium can be a computer readable storage UE speed, a UE direction, and a distance of the UE relative to one of the plurality of RRHs.

Example 3 includes the apparatus of example 1, wherein the one or more processors and memory are further configured to determine, from the UL transmission, propagation information of a high speed train ("HST") channel.

Example 4 includes the apparatus of example 1 or 3, wherein the one or more processors and memory are further configured to determine, from the UL transmission, a power attenuation level of the UE, a time delay of the UE, and a Doppler shift of the UE.

Example 5 includes the apparatus of example 1 or 3, wherein the one or more processors and memory are further configured to perform a Doppler shift estimation using a multipath fading channel environment.

Example 6 includes the apparatus of example 1, wherein the one or more processors and memory are further configured to provide the channel propagation conditions to the UE to enable the UE to track movement of the UE relative to one or more of the plurality of RRHs.

Example 7 includes the apparatus of example 1, wherein the channel propagation conditions for the UL transmission signal include one or more of: a delay shift, a Doppler shift, a delay spread, a Doppler spread, or a channel gain.

Example 8 includes the apparatus of example 1, 2, or 3, wherein the one or more processors and memory are further configured to calculate instantaneous channel propagation conditions and mobility status of an HST.

Example 9 includes the apparatus of example 1, wherein the one or more processors and memory are further configured to use channel reciprocity to derive characteristics of a two-path downlink channel by capturing two corresponding single path uplink channels to an RRH having a positive Doppler shift relative to the UE and an RRH having a negative Doppler shift relative to the UE, wherein the mobility status is one or more of UE speed, UE direction, and a distance from the UE to one of the plurality of RRHs.

Example 10 includes an apparatus of a user equipment (UE), the UE configured to communicate with an eNodeB, the apparatus comprising one or more processors and memory configured to: determine a mobility status of the UE comprising one or more of a UE speed, a UE direction, and a distance of the UE relative to one or more of a plurality of remote radio heads (RRHs); process, for transmission to the eNodeB, the mobility status in an UL transmission signal in a single frequency network (SFN) via one or more RRHs of the one or more of the plurality of RRHs to enable the eNodeB to determine a mobility status of the UE according to the UL transmission signal; and decode, at the UE, channel propagation conditions and mobility status in a downlink transmission signal received from the eNodeB.

Example 11 includes the apparatus of example 10, wherein the one or more processors and memory are further configured to encode, for transmission to the eNodeB in the UL transmission signal, propagation information of a high speed train (HST) channel.

Example 12 includes the apparatus of example 10 or 12, wherein the one or more processors and memory are further configured to encode, for transmission to the eNodeB in the UL transmission, a power attenuation level of the UE, a time delay of the UE, and a Doppler shift of the UE.

Example 13 includes the apparatus of example 10, wherein the one or more processors and memory are further configured to provide the channel propagation conditions to the UE to enable the UE to track movement of the UE relative to one or more of the plurality of RRHs.

Example 14 includes the apparatus of example 10 or 12, wherein the channel propagation conditions for the UL transmission signal include one or more of: a delay shift, a Doppler shift, a delay spread, a Doppler spread, or a channel gain.

Example 15 includes the apparatus of example 10, wherein the UE includes at least one of an antenna, a touch sensitive display screen, a speaker, a microphone, a graphics processor, an application processor, a baseband processor, an internal memory, a non-volatile memory port, and combinations thereof.

Example 16 includes least one machine readable storage medium having instructions embodied thereon for an eNodeB to communicate with a User Equipment (UE), the instructions when executed cause the eNodeB to: monitor an uplink (UL) transmission signal received from a User Equipment (UE) in the SFN via a plurality of remote radio heads (RRHs); determine a mobility status of the UE according to the UL transmission signal; periodically process, for transmission to the UE, channel propagation conditions and mobility status in a downlink transmission signal; and determine, from the UL transmission, a UE speed, a UE direction, and a distance of the UE relative to one of the plurality of RRHs.

Example 17 includes the at least one machine readable storage medium of example 16, further comprising instructions which when executed cause the eNodeB to determine, from the UL transmission, propagation information of a high speed train ("HST") channel.

Example 18 includes the at least one machine readable storage medium of example 16, further comprising instructions which when executed cause the eNodeB to determine, from the UL transmission, a power attenuation level of the UE, a time delay of the UE, and a Doppler shift of the UE.

Example 19 includes the at least one machine readable storage medium of example 16, further comprising instructions which when executed cause the eNodeB to perform Doppler shift estimation using a multipath fading channel environment.

Example 20 includes the at least one machine readable storage medium of example 16, further comprising instructions which when executed cause the eNodeB to provide the channel propagation conditions to the UE to enable the UE to track movement of the UE relative to one or more of the plurality of RRHs.

Example 21 includes the at least one machine readable storage medium of example 16, wherein the channel propagation conditions for the UL transmission signal include one or more of: a delay shift, a Doppler shift, a delay spread, a Doppler spread, or a channel gain.

Example 22 includes the at least one machine readable storage medium of example 16, further comprising instructions which when executed cause the eNodeB to calculate instantaneous channel propagation conditions and mobility status of an HST.

Example 23 includes the at least one machine readable storage medium of example 16, further comprising instructions which when executed cause the eNodeB to use channel reciprocity to derive characteristics of a two-path downlink channel by capturing two corresponding single path uplink channels to an RRH having a positive Doppler shift relative to the UE and an RRH having a negative Doppler shift relative to the UE, wherein the mobility status is one or more of UE speed, UE direction, and a distance from the UE to one of the plurality of RRHs

Example 24 includes an apparatus of an evolved node B (eNB) in a Single Frequency Network (SFN), the apparatus comprising one or more processors and memory configured to: monitor an uplink (UL) transmission signal received from a User Equipment (UE) in the SFN via a plurality of remote radio heads (RRHs); determine a mobility status of the UE according to the UL transmission signal; and periodically process, for transmission in a downlink transmission signal to the UE, channel propagation conditions and mobility status.

Example 25 includes the apparatus of example 24, wherein the one or more processors and memory are further configured to determine, from the UL transmission, a UE speed, a UE direction, and a distance of the UE relative to one of the plurality of RRHs.

Example 26 includes the apparatus of example 24, wherein the one or more processors and memory are further configured to determine, from the UL transmission, propagation information of a high speed train ("HST") channel.

Example 27 includes the apparatus of example 26, wherein the one or more processors and memory are further configured to determine, from the UL transmission, a power attenuation level of the UE, a time delay of the UE, and a Doppler shift of the UE.

Example 28 includes the apparatus of example 26, wherein the one or more processors and memory are further configured to perform a Doppler shift estimation using a multipath fading channel environment.

Example 29 includes the apparatus of example 24, wherein the one or more processors and memory are further configured to provide the channel propagation conditions to the UE to enable the UE to track movement of the UE relative to one or more of the plurality of RRHs.

Example 30 includes the apparatus of example 24, wherein the channel propagation conditions for the UL transmission signal include one or more of: a delay shift, a Doppler shift, a delay spread, a Doppler spread, or a channel gain.

Example 31 includes the apparatus of example 26, wherein the one or more processors and memory are further configured to calculate instantaneous channel propagation conditions and mobility status of an HST.

Example 32 includes the apparatus of example 24, wherein the one or more processors and memory are further configured to use channel reciprocity to derive characteristics of a two-path downlink channel by capturing two corresponding single path uplink channels to an RRH having a positive Doppler shift relative to the UE and an RRH having a negative Doppler shift relative to the UE, wherein the mobility status is one or more of UE speed, UE direction, and a distance from the UE to one of the plurality of RRHs.

Example 33 includes an apparatus of a user equipment (UE), the UE configured to communicate with an eNodeB, the apparatus comprising one or more processors and memory configured to: determine a mobility status of the UE comprising one or more of a UE speed, a UE direction, and a distance of the UE relative to one or more of a plurality of remote radio heads (RRHs); process, for transmission to the eNodeB, the mobility status in an UL transmission signal in a single frequency network (SFN) via one or more RRHs of the one or more of the plurality of RRHs to enable the eNodeB to determine a mobility status of the UE according to the UL transmission signal; and decode, at the UE, channel propagation conditions and mobility status in a downlink transmission signal received from the eNodeB.

Example 34 includes the apparatus of example 33, wherein the one or more processors and memory are further configured to encode, for transmission to the eNodeB in the UL transmission signal, propagation information of a high speed train (HST) channel.

Example 35 includes the apparatus of example 34, wherein the one or more processors and memory are further configured to encode, for transmission to the eNodeB in the UL transmission, a power attenuation level of the UE, a time delay of the UE, and a Doppler shift of the UE.

Example 36 includes the apparatus of example 33, wherein the one or more processors and memory are further configured to provide the channel propagation conditions to the UE to enable the UE to track movement of the UE relative to one or more of the plurality of RRHs.

Example 37 includes the apparatus of example 34, wherein the channel propagation conditions for the UL transmission signal include one or more of: a delay shift, a Doppler shift, a delay spread, a Doppler spread, or a channel gain.

Example 38 includes the apparatus of example 33, wherein the UE includes at least one of an antenna, a touch sensitive display screen, a speaker, a microphone, a graphics processor, an application processor, a baseband processor, an internal memory, a non-volatile memory port, and combinations thereof.

Example 39 includes at least one machine readable storage medium having instructions embodied thereon for an eNodeB to communicate with a User Equipment (UE), the instructions when executed cause the eNodeB to: monitor an uplink (UL) transmission signal received from a User Equipment (UE) in the SFN via a plurality of remote radio heads (RRHs); determine a mobility status of the UE according to the UL transmission signal; periodically process, for transmission to the UE, channel propagation conditions and mobility status in a downlink transmission signal; and determine, from the UL transmission, a UE speed, a UE direction, and a distance of the UE relative to one of the plurality of RRHs.

Example 40 includes the at least one machine readable storage medium of example 39, further comprising instructions which when executed cause the eNodeB to determine, from the UL transmission, propagation information of a high speed train ("HST") channel.

Example 41 includes the at least one machine readable storage medium of example 39, further comprising instructions which when executed cause the eNodeB to determine, from the UL transmission, a power attenuation level of the UE, a time delay of the UE, and a Doppler shift of the UE.

Example 42 includes the at least one machine readable storage medium of example 39, further comprising instructions which when executed cause the eNodeB to perform Doppler shift estimation using a multipath fading channel environment.

Example 43 includes the at least one machine readable storage medium of example 39, further comprising instructions which when executed cause the eNodeB to provide the channel propagation conditions to the UE to enable the UE to track movement of the UE relative to one or more of the plurality of RRHs.

Example 44 includes the at least one machine readable storage medium of example 39, wherein the channel propagation conditions for the UL transmission signal include one or more of: a delay shift, a Doppler shift, a delay spread, a Doppler spread, or a channel gain.

Example 45 includes the at least one machine readable storage medium of example 39, further comprising instructions which when executed cause the eNodeB to calculate instantaneous channel propagation conditions and mobility status of an HST

Example 46 includes the at least one machine readable storage medium of example 39, further comprising instructions which when executed cause the eNodeB to use channel reciprocity to derive characteristics of a two-path downlink channel by capturing two corresponding single path uplink channels to an RRH having a positive Doppler shift relative to the UE and an RRH having a negative Doppler shift relative to the UE, wherein the mobility status is one or more of UE speed, UE direction, and a distance from the UE to one of the plurality of RRHs.

Example 47 includes an apparatus of an evolved node B (eNB) in a Single Frequency Network (SFN), the apparatus comprising one or more processors and memory configured to: monitor an uplink (UL) transmission signal received from a User Equipment (UE) in the SFN via a plurality of remote radio heads (RRHs); determine a mobility status of the UE according to the UL transmission signal; and periodically process, for transmission in a downlink transmission signal to the UE, channel propagation conditions and mobility status.

Example 48 includes the apparatus of example 47, wherein the one or more processors and memory are further configured to: determine, from the UL transmission, a UE speed, a UE direction, and a distance of the UE relative to one of the plurality of RRHs; determine, from the UL transmission, propagation information of a high speed train ("HST") channel; determine, from the UL transmission, a power attenuation level of the UE, a time delay of the UE, and a Doppler shift of the UE; and/or perform a Doppler shift estimation using a multipath fading channel environment.

Example 49 includes the apparatus of example 47 or 48, wherein the one or more processors and memory are further configured to provide the channel propagation conditions to the UE to enable the UE to track movement of the UE relative to one or more of the plurality of RRHs.

In Example 50, the subject matter of Example 47 or any of the Examples described herein, wherein the channel propagation conditions for the UL transmission signal include one or more of: a delay shift, a Doppler shift, a delay spread, a Doppler spread, or a channel gain.

In Example 51, the subject matter of Example 47 or any of the Examples described herein, wherein the one or more processors and memory are further configured to calculate instantaneous channel propagation conditions and mobility status of an HST.

In Example 52, the subject matter of Example 47 or any of the Examples described herein, wherein the one or more processors and memory are further configured to use channel reciprocity to derive characteristics of a two-path downlink channel by capturing two corresponding single path uplink channels to an RRH having a positive Doppler shift relative to the UE and an RRH having a negative Doppler shift relative to the UE, wherein the mobility status is one or more of UE speed, UE direction, and a distance from the UE to one of the plurality of RRHs.

Example 53 includes an apparatus of a user equipment (UE), the UE configured to communicate with an eNodeB, the apparatus comprising one or more processors and memory configured to: determine a mobility status of the UE comprising one or more of a UE speed, a UE direction, and a distance of the UE relative to one or more of a plurality of remote radio heads (RRHs); process, for transmission to the eNodeB, the mobility status in an UL transmission signal in a single frequency network (SFN) via one or more RRHs of the one or more of the plurality of RRHs to enable the eNodeB to determine a mobility status of the UE according to the UL transmission signal; and decode, at the UE, channel propagation conditions and mobility status in a downlink transmission signal received from the eNodeB.

Example 54 includes the apparatus of example 53, wherein the one or more processors and memory are further configured to: encode, for transmission to the eNodeB in the UL transmission signal, propagation information of a high speed train (HST) channel; encode, for transmission to the eNodeB in the UL transmission, a power attenuation level of the UE, a time delay of the UE, and a Doppler shift of the UE; and/or provide the channel propagation conditions to the UE to enable the UE to track movement of the UE relative to one or more of the plurality of RRHs, and wherein the channel propagation conditions for the UL transmission signal include one or more of: a delay shift, a Doppler shift, a delay spread, a Doppler spread, or a channel gain, wherein the UE includes at least one of an antenna, a touch sensitive display screen, a speaker, a microphone, a graphics processor, an application processor, a baseband processor, an internal memory, a non-volatile memory port, and combinations thereof.

Example 55 includes least one machine readable storage medium having instructions embodied thereon for an eNodeB to communicate with a User Equipment (UE), the instructions when executed cause the eNodeB to: monitor an uplink (UL) transmission signal received from a User Equipment (UE) in the SFN via a plurality of remote radio heads (RRHs); determine a mobility status of the UE according to the UL transmission signal; periodically process, for transmission to the UE, channel propagation conditions and mobility status in a downlink transmission signal; and determine, from the UL transmission, a UE speed, a UE direction, and a distance of the UE relative to one of the plurality of RRHs.

Example 56 includes the at least one machine readable storage medium of claim 55, further comprising instructions which when executed cause the eNodeB to determine, from the UL transmission, propagation information of a high speed train ("HST") channel.

Example 57 includes the at least one machine readable storage medium of claim 55 or 56, further comprising instructions which when executed cause the eNodeB to: determine, from the UL transmission, a power attenuation level of the UE, a time delay of the UE, and a Doppler shift of the UE.

In Example 58, the subject matter of Example 55 or any of the Examples described herein, further comprising instructions which when executed cause the eNodeB to perform Doppler shift estimation using a multipath fading channel environment; or provide the channel propagation conditions to the UE to enable the UE to track movement of the UE relative to one or more of the plurality of RRHs.

In Example 59, the subject matter of Example 55 or any of the Examples described herein, wherein the channel propagation conditions for the UL transmission signal include one or more of: a delay shift, a Doppler shift, a delay spread, a Doppler spread, or a channel gain.

In Example 60, the subject matter of Example 55 or any of the Examples described herein, further comprising instructions which when executed cause the eNodeB to calculate instantaneous channel propagation conditions and mobility status of an HST.

In Example 61, the subject matter of Example 55 or any of the Examples described herein, further comprising instructions which when executed cause the eNodeB to use channel reciprocity to derive characteristics of a two-path downlink channel by capturing two corresponding single path uplink channels to an RRH having a positive Doppler shift relative to the UE and an RRH having a negative Doppler shift relative to the UE, wherein the mobility status is one or more of UE speed, UE direction, and a distance from the UE to one of the plurality of RRHs.

Example 62 includes a device to communicate with a User Equipment (UE), the device comprising: means for monitoring an uplink (UL) transmission signal received from a User Equipment (UE) in the SFN via a plurality of remote radio heads (RRHs); means for determining a mobility status of the UE according to the UL transmission signal; means for processing, for transmission to the UE, channel propagation conditions and mobility status in a downlink transmission signal; and means for determining, from the UL transmission, a UE speed, a UE direction, and a distance of the UE relative to one of the plurality of RRHs.

Example 63 includes the device of claim 62, further comprising means for determining, from the UL transmission, propagation information of a high speed train ("HST") channel.

Example 64 includes the device of claim 62, further comprising means for determining, from the UL transmission, a power attenuation level of the UE, a time delay of the UE, and a Doppler shift of the UE.

Example 65 includes the device of claim 62, further comprising means for performing Doppler shift estimation using a multipath fading channel environment.

Example 66 includes the device of claim 62, further comprising means for providing the channel propagation conditions to the UE to enable the UE to track movement of the UE relative to one or more of the plurality of RRHs.

Example 67 includes the device of claim 62, wherein the channel propagation conditions for the UL transmission signal include one or more of: a delay shift, a Doppler shift, a delay spread, a Doppler spread, or a channel gain.

Example 68 includes the device of claim 62, further comprising means for calculating instantaneous channel propagation conditions and mobility status of an HST.

Example 69 includes the device of claim 62, further comprising means for using channel reciprocity to derive characteristics of a two-path downlink channel by capturing two corresponding single path uplink channels to an RRH having a positive Doppler shift relative to the UE and an RRH having a negative Doppler shift relative to the UE, wherein the mobility status is one or more of UE speed, UE direction, and a distance from the UE to one of the plurality of RRHs.

Various techniques, or certain aspects or portions thereof, may take the form of program code (i.e., instructions) embodied in tangible media, such as floppy diskettes, compact disc-read-only memory (CD-ROMs), hard drives, transitory or non-transitory computer readable storage mediums, or any other machine-readable storage medium wherein, when the program code is loaded into and executed by a machine, such as a computer, the machine becomes an apparatus for practicing the various techniques. A non-transitory computer readable storage medium can be a computer readable storage medium that does not include signal. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data The node and wireless device may also include a transceiver module (i.e., transceiver), a counter module (i.e., counter), a processing module (i.e., processor), and/or a clock module (i.e., clock) or timer module (i.e., timer). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

While the flowcharts presented for this technology may imply a specific order of execution, the order of execution may differ from what is illustrated. For example, the order of two more blocks may be rearranged relative to the order shown. Further, two or more blocks shown in succession may be executed in parallel or with partial parallelization. In some configurations, one or more blocks shown in the flow chart may be omitted or skipped. Any number of counters, state variables, warning semaphores, or messages may be added to the logical flow for enhanced utility, accounting, performance, measurement, troubleshooting, or other purposes.

As used herein, the word "or" indicates an inclusive disjunction. For example, as used herein, the phrase "A or B" represents an inclusive disjunction of exemplary conditions A and B. Hence, "A or B" is false only if both condition A is false and condition B is false. When condition A is true and condition B is also true, "A or B" is also true. When condition A is true and condition B is false, "A or B" is true. When condition B is true and condition A is false, "A or B" is true. In other words, the term "or," as used herein, should not be construed as an exclusive disjunction. The term "xor" is used where an exclusive disjunction is intended.

As used herein, the term processor can include general-purpose processors, specialized processors such as VLSI, FPGAs, and other types of specialized processors, as well as base-band processors used in transceivers to send, receive, and process wireless communications.

It should be understood that many of the functional units described in this specification have been labeled as modules, in order to more particularly emphasize their implementation independence. For example, a module can be implemented as a hardware circuit (e.g., an application-specific integrated circuit (ASIC)) comprising custom VLSI circuits or gate arrays, off-the-shelf semiconductors such as logic chips, transistors, or other discrete components. A module can also be implemented in programmable hardware devices such as field programmable gate arrays, programmable array logic, programmable logic devices or the like.

Modules can also be implemented in software for execution by various types of processors. An identified module of executable code can, for instance, comprise one or more physical or logical blocks of computer instructions, which can, for instance, be organized as an object, procedure, or function. Nevertheless, the executables of an identified module do not have to be physically located together, but can comprise disparate instructions stored in different locations which, when joined logically together, comprise the module and achieve the stated purpose for the module.

Indeed, a module of executable code can be a single instruction, or many instructions, and can even be distributed over several different code segments, among different programs, and across several memory devices. Similarly, operational data can be identified and illustrated herein within modules, and can be embodied in any suitable form and organized within any suitable type of data structure. The operational data can be collected as a single data set, or can be distributed over different locations including over different storage devices, and can exist, at least partially, merely as electronic signals on a system or network. The modules can be passive or active, including agents operable to perform desired functions.

As used herein, the term "processor" can include general purpose processors, specialized processors such as VLSI, FPGAs, and other types of specialized processors, as well as base band processors used in transceivers to send, receive, and process wireless communications.

Reference throughout this specification to "an example" means that a particular feature, structure, or characteristic described in connection with the example is included in at least one embodiment. Thus, appearances of the phrases "in an example" in various places throughout this specification are not necessarily all referring to the same embodiment.

As used herein, a plurality of items, structural elements, compositional elements, and/or materials can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples can be referred to herein along with alternatives for the various components thereof. It is understood that such embodiments, examples, and alternatives are not to be construed as de facto equivalents of one another, but are to be considered as separate and autonomous.

Furthermore, the described features, structures, or characteristics can be combined in any suitable manner in one or more embodiments. In the foregoing description, numerous specific details are provided, such as examples of layouts, distances, network examples, etc., to provide a thorough understanding of some embodiments. One skilled in the relevant art will recognize, however, that the some embodiments can be practiced without one or more of the specific details, or with other methods, components, layouts, etc. In other instances, well-known structures, materials, or operations are not shown or described in detail to avoid obscuring aspects of different embodiments.

While the forgoing examples are illustrative of the principles used in various embodiments in one or more particular applications, it will be apparent to those of ordinary skill in the art that numerous modifications in form, usage and details of implementation can be made without the exercise of inventive faculty. Accordingly, it is not intended that the claimed matter be limited, except as by the claims set forth below.

**Claims**

1. An apparatus of an evolved node B, eNB, in a Single Frequency Network, SFN, the apparatus comprising one or more processors and memory configured to:

   monitor an uplink, UL, transmission signal received from a User Equipment, UE, in the SFN via a plurality of remote radio heads, RRHs;
   determine a mobility status of the UE according to the UL transmission signal; and
   periodically process, for transmission in a downlink transmission signal to the UE, channel propagation conditions and mobility status of the UE with respect to each of the plurality of RRHs; and
   provide the channel propagation conditions to the UE to enable the UE to track movement of the UE relative to one or more of the plurality of RRHs and to estimate channel characteristics based on the channel propagation conditions and mobility status of the UE with respect to each of the plurality of RRHs.

2. The apparatus of claim 1, wherein the one or more processors and memory are further configured to:

   determine, from the UL transmission, a UE speed, a UE direction, and a distance of the UE relative to one of the plurality of RRHs;
   determine, from the UL transmission, propagation information of a high speed train, HST, channel; or
   determine, from the UL transmission, a power attenuation level of the UE, a time delay of the UE, and a Doppler shift of the UE; and
   perform a Doppler shift estimation using a multipath fading channel environment.

3. The apparatus of claim 1-2, wherein the channel propagation conditions for the UL transmission signal include one or more of: a delay shift, a Doppler shift, a delay spread, a Doppler spread, or a channel gain.

4. The apparatus of claim 1-3, wherein the one or more processors and memory are further configured to calculate instantaneous channel propagation conditions and mobility status of an HST.

5. The apparatus of claim 1-4, wherein the one or more processors and memory are further configured to use channel reciprocity to derive characteristics of a two-path downlink channel by capturing two corresponding single path uplink channels to an RRH having a positive Doppler shift relative to the UE and an RRH having a negative Doppler shift relative to the UE, wherein the mobility status is one or more of UE speed, UE direction, and a distance from the UE to one of the plurality of RRHs.

6. An apparatus of a user equipment, UE, the UE configured to communicate with an eNodeB, the apparatus comprising one or more processors and memory configured to:

   determine a mobility status of the UE comprising one or more of a UE speed, a UE direction, and a distance of the UE relative to one or more of a plurality of remote radio heads, RRHs;
   process, for transmission to the eNodeB, the mobility status in an UL transmission signal in a single frequency network, SFN, via one or more RRHs of the one or more of the plurality of RRHs to enable the eNodeB to determine a mobility status of the UE according to the UL transmission signal; and
   decode, at the UE, channel propagation conditions and mobility status of the UE with respect to each of the plurality of RRHs in a downlink transmission signal received from the eNodeB; and
   estimate channel characteristics based on the channel propagation conditions and mobility status of the UE with respect to each of the plurality of RRHs.

7. The apparatus of claim 6, wherein the one or more processors and memory are further configured to:

encode, for transmission to the eNodeB in the UL transmission signal, propagation information of a high speed train, HST, channel; or

encode, for transmission to the eNodeB in the UL transmission, a power attenuation level of the UE, a time delay of the UE, and a Doppler shift of the UE; or

provide the channel propagation conditions to the UE to enable the UE to track movement of the UE relative to one or more of the plurality of RRHs, and

wherein the channel propagation conditions for the UL transmission signal include one or more of: a delay shift, a Doppler shift, a delay spread, a Doppler spread, or a channel gain, wherein the UE includes at least one of an antenna, a touch sensitive display screen, a speaker, a microphone, a graphics processor, an application processor, a baseband processor, an internal memory, a non-volatile memory port, and combinations thereof.

8. At least one machine readable storage medium having instructions embodied thereon for an eNodeB to communicate with a User Equipment, UE, the instructions when executed cause the eNodeB to:

monitor an uplink, UL, transmission signal received from a User Equipment, UE, in the SFN via a plurality of remote radio heads, RRHs;

determine a mobility status of the UE according to the UL transmission signal;

periodically process, for transmission to the UE, channel propagation conditions and mobility status of the UE with respect to each of the plurality of RRHs in a downlink transmission signal; and

determine, from the UL transmission, a UE speed, a UE direction, and a distance of the UE relative to one of the plurality of RRHs; and

provide the channel propagation conditions to the UE to enable the UE to track movement of the UE relative to one or more of the plurality of RRHs and estimate channel characteristics based on the channel propagation conditions and mobility status of the UE with respect to each of the plurality of RRHs.

9. The at least one machine readable storage medium of claim 8, further comprising instructions which when executed cause the eNodeB to determine, from the UL transmission, propagation information of a high speed train, HST, channel.

10. The at least one machine readable storage medium of claim 8 or 9, further comprising instructions which when executed cause the eNodeB to:
determine, from the UL transmission, a power attenuation level of the UE, a time delay of the UE, and a Doppler shift of the UE.

11. The at least one machine readable storage medium of claim 8-10, further comprising instructions which when executed cause the eNodeB to perform Doppler shift estimation using a multipath fading channel environment; or provide the channel propagation conditions to the UE to enable the UE to track movement of the UE relative to one or more of the plurality of RRHs.

12. The at least one machine readable storage medium of claim 8-11, wherein the channel propagation conditions for the UL transmission signal include one or more of: a delay shift, a Doppler shift, a delay spread, a Doppler spread, or a channel gain.

13. The at least one machine readable storage medium of claim 8-12, further comprising instructions which when executed cause the eNodeB to calculate instantaneous channel propagation conditions and mobility status of an HST.

14. The at least one machine readable storage medium of claim 8-13, further comprising instructions which when executed cause the eNodeB to use channel reciprocity to derive characteristics of a two-path downlink channel by capturing two corresponding single path uplink channels to an RRH having a positive Doppler shift relative to the UE and an RRH having a negative Doppler shift relative to the UE, wherein the mobility status is one or more of UE speed, UE direction, and a distance from the UE to one of the plurality of RRHs.

**Patentansprüche**

1. Vorrichtung eines evolved Node B, eNB, in einem Einzelfrequenznetzwerk, SFN, wobei die Vorrichtung einen oder mehrere Prozessoren und einen Speicher umfasst, die konfiguriert sind zum:

Überwachen eines Uplink-, UL-, Übertragungssignals, das von einem Benutzergerät, UE, im SFN über eine Mehrzahl von Remote-Funkköpfen, RRHs, empfangen wird;

Bestimmen eines Mobilitätsstatus des UE gemäß dem UL-Übertragungssignal; und

periodischen Verarbeiten, zur Übertragung in einem Downlink-Übertragungssignal an das UE, von Kanalausbreitungsbedingungen und eines Mobilitätsstatus des UE in Bezug auf jeden der Mehrzahl von RRHs; und

Bereitstellen der Kanalausbreitungsbedingungen an das UE, um es dem UE zu ermöglichen, eine Bewegung des UE relativ zu einem oder mehreren der Mehrzahl von RRHs zu verfolgen und Kanaleigenschaften basierend auf den

Kanalausbreitungsbedingungen und dem Mobilitätsstatus des UE in Bezug auf jeden der Mehrzahl von RRHs zu schätzen.

2. Vorrichtung nach Anspruch 1, wobei der eine oder die mehreren Prozessoren und der Speicher ferner konfiguriert sind zum:

Bestimmen, aus der UL-Übertragung, einer UE-Geschwindigkeit, einer UE-Richtung und einer Entfernung des UE relativ zu einem der Mehrzahl von RRHs;

Bestimmen, aus der UL-Übertragung, von Ausbreitungsinformation eines Hochgeschwindigkeitszug-, HST-, Kanals; oder

Bestimmen, aus der UL-Übertragung, eines Leistungsdämpfungspegels des UE, einer Zeitverzögerung des UE und einer Dopplerverschiebung des UE; und

Durchführen einer Dopplerverschiebungsschätzung unter Verwendung einer Multipath-Fading-Kanalumgebung.

3. Vorrichtung nach Anspruch 1-2, wobei die Kanalausbreitungsbedingungen für das UL-Übertragungssignal eine oder mehrere der folgenden umfassen:

eine Verzögerungsverschiebung, eine Dopplerverschiebung, eine Verzögerungsspreizung, eine Dopplerspreizung oder eine Kanalverstärkung.

4. Vorrichtung nach Anspruch 1-3, wobei der eine oder die mehreren Prozessoren und der Speicher ferner konfiguriert sind zum Berechnen momentaner Kanalausbreitungsbedingungen und eines Mobilitätsstatus eines HST.

5. Vorrichtung nach Anspruch 1-4, wobei der eine oder die mehreren Prozessoren und der Speicher ferner konfiguriert sind zum Verwenden von Kanalreziprozität zum Ableiten von Eigenschaften eines Zweipfad-Downlink-Kanals durch Erfassen von zwei entsprechenden Einzelpfad-Uplink-Kanälen zu einem RRH mit einer positiven Dopplerverschiebung relativ zum UE und einem RRH mit einer negativen Dopplerverschiebung relativ zum UE, wobei der Mobilitätsstatus eines oder mehrere von UE-Geschwindigkeit, UE-Richtung und einer Entfernung von dem UE zu einem der Mehrzahl von RRHs ist.

6. Vorrichtung eines Benutzergeräts, UE, wobei das UE konfiguriert ist zum Kommunizieren mit einem eNodeB, wobei die Vorrichtung einen oder mehrere Prozessoren und einen Speicher umfasst, die konfiguriert sind zum:

Bestimmen eines Mobilitätsstatus des UE, umfassend eines oder mehrere von einer UE-Geschwindigkeit, einer UE-Richtung und einer Entfernung des UE relativ zu einem oder mehreren einer Mehrzahl von Remote-Funkköpfen, RRHs;

Verarbeiten, zur Übertragung an den eNodeB, des Mobilitätsstatus in einem UL-Übertragungssignal in einem Einzelfrequenznetzwerk, SFN, über einen oder mehrere RRHs des einen oder der mehreren der Mehrzahl von RRHs, um es dem eNodeB zu ermöglichen, einen Mobilitätsstatus des UE gemäß dem UL-Übertragungssignal zu bestimmen; und

Decodieren, am UE, von Kanalausbreitungsbedingungen und eines Mobilitätsstatus des UE in Bezug auf jeden der Mehrzahl von RRHs in einem Downlink-Übertragungssignal, das von dem eNodeB empfangen wird; und

Schätzen von Kanaleigenschaften basierend auf den Kanalausbreitungsbedingungen und dem Mobilitätsstatus des UE in Bezug auf jeden der Mehrzahl von RRHs.

7. Vorrichtung nach Anspruch 6, wobei der eine oder die mehreren Prozessoren und der Speicher ferner konfiguriert sind zum:

Codieren, zur Übertragung an den eNodeB in dem UL-Übertragungssignal, von Ausbreitungsinformation eines Hochgeschwindigkeitszug-, HST-, Kanals; oder

Codieren, zur Übertragung an den eNodeB in der UL-Übertragung, eines Leistungsdämpfungspegels des UE, einer Zeitverzögerung des UE und einer Dopplerverschiebung des UE; oder

Bereitstellen der Kanalausbreitungsbedingungen an das UE, um es dem UE zu ermöglichen, eine Bewegung des UE relativ zu einem oder mehreren der Mehrzahl von RRHs zu verfolgen, und

wobei die Kanalausbreitungsbedingungen für das UL-Übertragungssignal eine oder mehrere der folgenden umfassen:

eine Verzögerungsverschiebung, eine Dopplerverschiebung, eine Verzögerungsspreizung, eine Dopplerspreizung oder eine Kanalverstärkung, wobei das UE mindestens eines von einer Antenne, einem berührungsempfindlichen Anzeigebildschirm, einem Lautsprecher, einem Mikrofon, einem Grafikprozessor, einem Anwendungsprozessor, einem Basisbandprozessor, einem internen Speicher, einem nichtflüchtigen Speicheranschluss und Kombinationen davon umfasst.

8. Mindestens ein maschinenlesbares Speichermedium mit darauf enthaltenen Anweisungen für einen eNodeB zum Kommunizieren mit einem Benutzergerät, UE, wobei die Anweisungen, wenn sie ausgeführt werden, den eNodeB veranlassen zum:

Überwachen eines Uplink-, UL-, Übertragungssignals, das von einem Benutzergerät, UE, im SFN über eine Mehrzahl von Remote-Funkköpfen, RRHs, empfangen wird;

Bestimmen eines Mobilitätsstatus des UE gemäß dem UL-Übertragungssignal;

periodischen Verarbeiten, zur Übertragung an das UE, von Kanalausbreitungsbedingungen und eines Mobilitätsstatus des UE in Bezug auf jeden der Mehrzahl von RRHs in einem Downlink-Übertragungssignal; und

Bestimmen, aus der UL-Übertragung, einer UE-Geschwindigkeit, einer UE-Richtung und einer Entfernung des UE relativ zu einem der Mehrzahl von RRHs; und

Bereitstellen der Kanalausbreitungsbedingungen an das UE, um es dem UE zu ermöglichen, eine Bewegung des UE relativ zu einem oder mehreren der Mehrzahl von RRHs zu verfolgen und Kanaleigenschaften basierend auf den Kanalausbreitungsbedingungen und dem Mobilitätsstatus des UE in Bezug auf jeden der Mehrzahl von RRHs zu schätzen.

9. Mindestens ein maschinenlesbares Speichermedium nach Anspruch 8, ferner umfassend Anweisungen, die, wenn sie ausgeführt werden, den eNodeB veranlassen, aus der UL-Übertragung, Ausbreitungsinformation eines Hochgeschwindigkeitszug-, HST-, Kanals zu bestimmen.

10. Mindestens ein maschinenlesbares Speichermedium nach Anspruch 8 oder 9, ferner umfassend Anweisungen, die, wenn sie ausgeführt werden, den eNodeB veranlassen zum:
Bestimmen, aus der UL-Übertragung, eines Leistungsdämpfungspegels des UE, einer Zeitverzögerung des UE und einer Dopplerverschiebung des UE.

11. Mindestens ein maschinenlesbares Speichermedium nach Anspruch 8-10, ferner umfassend Anweisungen, die, wenn sie ausgeführt werden, den eNodeB veranlassen, eine Dopplerverschiebungsschätzung unter Verwendung einer Mehrwege-Fading-Kanalumgebung durchzuführen; oder Bereitstellen der Kanalausbreitungsbedingungen an das UE, um es dem UE zu ermöglichen, eine Bewegung des UE relativ zu einem oder mehreren der Mehrzahl von RRHs zu verfolgen.

12. Mindestens ein maschinenlesbares Speichermedium nach Anspruch 8-11, wobei die Kanalausbreitungsbedingungen für das UL-Übertragungssignal eine oder mehrere der folgenden umfassen: eine Verzögerungsverschiebung, eine Dopplerverschiebung, eine Verzögerungsspreizung, eine Dopplerspreizung oder eine Kanalverstärkung.

13. Mindestens ein maschinenlesbares Speichermedium nach Anspruch 8-12, ferner umfassend Anweisungen, die, wenn sie ausgeführt werden, den eNodeB veranlassen, momentane Kanalausbreitungsbedingungen und einen Mobilitätsstatus eines HST zu berechnen.

14. Mindestens ein maschinenlesbares Speichermedium nach Anspruch 8-13, ferner umfassend Anweisungen, die, wenn sie ausgeführt werden, den eNodeB veranlassen, Kanalreziprozität zum Ableiten von Eigenschaften eines Zweipfad-Downlink-Kanals durch Erfassen von zwei entsprechenden Einzelpfad-Uplink-Kanälen zu einem RRH mit einer positiven Dopplerverschiebung relativ zum UE und einem RRH mit einer negativen Dopplerverschiebung relativ zum UE zu verwenden, wobei der Mobilitätsstatus eines oder mehrere von UE-Geschwindigkeit, UE-Richtung und einer Entfernung von dem UE zu einem der Mehrzahl von RRHs ist.

**Revendications**

1. Un appareil d'un nœud B amélioré, eNB, dans un réseau à fréquence unique, SFN, l'appareil comprenant un ou plusieurs processeurs et une mémoire configurés pour :

   surveiller un signal de transmission de liaison montante, UL, reçu en provenance d'un équipement utilisateur, UE, dans le SFN via une pluralité de têtes radio distantes, RRH ;
   déterminer un statut de mobilité de l'UE d'après le signal de transmission UL ; et
   traiter périodiquement, pour transmission à l'UE dans un signal de transmission de liaison descendante, des conditions de propagation de canal et un statut de mobilité de l'UE à l'égard de chacune de la pluralité de RRH ; et
   délivrer à l'UE les conditions de propagation de canal pour permettre à l'UE de suivre le déplacement de l'UE par rapport à une ou plusieurs de la pluralité de RRH, et pour estimer les caractéristiques du canal sur la base des conditions de propagation de canal et du statut de mobilité de l'UE à l'égard de chacune de la pluralité de RRH.

2. L'appareil de la revendication 1, dans lequel les un ou plusieurs processeurs et la mémoire sont en outre configurés pour :

   déterminer, à partir de la transmission UL, une vitesse de l'UE, une direction de l'UE, et une distance de l'UE par rapport à l'une de la pluralité de RRH ;
   déterminer, à partir de la transmission UL, une information de propagation d'un canal de train à grande vitesse, TGV ; ou
   déterminer, à partir de la transmission UL, un niveau d'atténuation de puissance de l'UE, un retard temporel de l'UE, et un décalage Doppler de l'UE ; et
   effectuer une estimation de décalage Doppler en utilisant un environnement de canal à atténuation multitrajet.

3. L'appareil des revendications 1 à 2, dans lequel les conditions de propagation de canal pour le signal de transmission UL comprennent un ou plusieurs d'entre : un décalage de retard, un décalage Doppler, un étalement de retard, un étalement Doppler, ou un gain de canal.

4. L'appareil des revendications 1 à 3, dans lequel les un ou plusieurs processeurs et la mémoire sont en outre configurés pour calculer des conditions instantanées de propagation de canal et un statut de mobilité d'un TGV.

5. L'appareil des revendications 1 à 4, dans lequel les un ou plusieurs processeurs et la mémoire sont en outre configurés pour utiliser une réciprocité de canal pour dériver des caractéristiques d'un canal de liaison descendante sur deux trajets par capture de deux canaux de liaison montante sur un trajet unique correspondant vers une RRH présentant un décalage Doppler positif par rapport à l'UE et une RRH présentant un décalage Doppler négatif par rapport à l'UE, le statut de mobilité étant un ou plusieurs d'entre une vitesse de l'UE, une direction de l'UE, et une distance de l'UE par rapport à l'une de la pluralité de RRH.

6. Un appareil d'un équipement utilisateur, UE, l'UE étant configuré pour communiquer avec un eNodeB, l'appareil comprenant un ou plusieurs processeurs et une mémoire configurés pour :

   déterminer un statut de mobilité de l'UE comprenant une ou plusieurs d'entre une vitesse de l'UE, une direction de l'UE, et une distance de l'UE par rapport à une ou plusieurs d'une pluralité de têtes radio distantes, RRH ;
   traiter, pour transmission à l'eNodeB, le statut de mobilité dans un signal de transmission UL dans un réseau à fréquence unique, SFN, via une ou plusieurs RRH des une ou plusieurs de la pluralité de RRH pour permettre à l'eNodeB de déterminer un statut de mobilité de l'UE en fonction du signal de transmission UL ; et
   décoder, au niveau de l'UE, des conditions de propagation de canal et un statut de mobilité de l'UE à l'égard de chacune de la pluralité de RRH dans un signal de transmission de liaison descendante reçu en provenance de l'eNodeB ; et
   estimer des caractéristiques de canal sur la base des conditions de propagation de canal et du statut de mobilité de l'UE à l'égard de chacune de la pluralité de RRH.

7. L'appareil de la revendication 6, dans lequel les un ou plusieurs processeurs et la mémoire sont en outre configurés pour :

   coder, pour transmission à l'eNodeB dans le signal de transmission UL, une information de propagation d'un canal de train à grande vitesse, TGV ; ou

coder, pour transmission à l'eNodeB dans la transmission UL, un niveau d'atténuation de puissance de l'UE, un retard temporel de l'UE, et un décalage Doppler de l'UE ; ou

délivrer à l'UE les conditions de propagation de canal pour permettre à l'UE de suivre le déplacement de l'UE par rapport à une ou plusieurs de la pluralité de RRH, et

dans lequel les conditions de propagation de canal pour le signal de transmission UL comprennent un ou plusieurs d'entre : un décalage de retard, un décalage Doppler, un étalement de retard, un étalement Doppler, ou un gain de canal, l'UE comprenant au moins l'un d'entre une antenne, un écran d'affichage sensible au toucher, un haut-parleur, un microphone, un processeur graphique, un processeur applicatif, un processeur bande de base, une mémoire interne, un port de mémoire non volatile, et des combinaisons des précédents.

8. Au moins un support de stockage lisible par machine dans lequel sont incorporées des instructions pour qu'un eNodeB communique avec un équipement utilisateur, UE, les instructions faisant en sorte, lorsqu'elles sont exécutées, que l' eNodeB :

surveille un signal de transmission de liaison montante, UL, reçu en provenance d'un équipement utilisateur, UE, dans le SFN via une pluralité de têtes radio distantes, RRH ;

détermine un statut de mobilité de l'UE d'après le signal de transmission UL ;

traite périodiquement, pour transmission à l'UE, des conditions de propagation de canal et un statut de mobilité de l'UE à l'égard de chacune de la pluralité de RRH, dans un signal de transmission de liaison descendante, ; et

détermine, à partir de la transmission UL, une vitesse de l'UE, une direction de l'UE, et une distance de l'UE par rapport à l'une de la pluralité de RRH ; et

délivre à l'UE les conditions de propagation de canal pour permettre à l'UE de suivre le déplacement de l'UE par rapport à une ou plusieurs de la pluralité de RRH, et pour estimer les caractéristiques du canal sur la base des conditions de propagation de canal et du statut de mobilité de l'UE à l'égard de chacune de la pluralité de RRH.

9. L'au moins un support de stockage lisible par machine de la revendication 8, comportant des instructions qui, lorsqu'elles sont exécutées, font en sorte que l' eNodeB détermine, à partir de la transmission UL, une information de propagation d'un canal de train à grande vitesse, TGV.

10. L'au moins un support de stockage lisible par machine de la revendication 8, comportant des instructions qui, lorsqu'elles sont exécutées, font en sorte que l'eNodeB :
détermine, à partir de la transmission UL, un niveau d'atténuation de puissance de l'UE, un retard temporel de l'UE, et un décalage Doppler de l'UE.

11. L'au moins un support de stockage lisible par machine de l'une des revendications 8 à 10, comportant des instructions qui, lorsqu'elles sont exécutées, font en sorte que l'eNodeB :

effectue une estimation de décalage Doppler en utilisant un environnement de canal à atténuation multitrajet ; ou

délivre à l'UE les conditions de propagation de canal pour permettre à l'UE de suivre le déplacement de l'UE par rapport à une ou plusieurs de la pluralité de RRH.

12. L'au moins un support de stockage lisible par machine de l'une des revendications 8 à 11, dans lequel les conditions de propagation de canal pour le signal de transmission UL comprennent un ou plusieurs d'entre : un décalage de retard, un décalage Doppler, un étalement de retard, un étalement Doppler, ou un gain de canal.

13. L'au moins un support de stockage lisible par machine de l'une des revendications 8 à 12, comportant des instructions qui, lorsqu'elles sont exécutées, font en sorte que l'eNodeB calcule des conditions instantanées de propagation de canal et un statut de mobilité d'un TGV.

14. L'au moins un support de stockage lisible par machine de l'une des revendications 8 à 13, comportant des instructions qui, lorsqu'elles sont exécutées, font en sorte que l'eNodeB utilise une réciprocité de canal pour dériver des caractéristiques d'un canal de liaison descendante sur deux trajets par capture de deux canaux de liaison montante sur un trajet unique correspondant vers une RRH présentant un décalage Doppler positif par rapport à l'UE et une RRH présentant un décalage Doppler négatif par rapport à l'UE, le statut de mobilité étant un ou plusieurs d'entre une vitesse de l'UE, une direction de l'UE, et une distance de l'UE par rapport à l'une de la pluralité de RRH.

FIG. 1

204

206

202

FIG. 2

FIG. 3

FIG. 4

FIG. 5A

525

FIG. 5B

FIG. 5C

600

Monitor an uplink (UL) transmission signal received from a User Equipment (UE) in the SFN via a plurality of remote radio heads (RRHs) — 610

Determine a mobility status of the UE according to the UL transmission signal — 620

Periodically process, for transmission in a downlink transmission signal to the UE, channel propagation conditions and mobility status — 630

## FIG. 6

700

Determine a mobility status of the UE comprising one or more of a UE speed, a UE direction, and a distance of the UE relative to one or more of a plurality of remote radio heads (RRHs) ⟿ 710

Process, for transmission to the eNodeB, the mobility status in an UL transmission signal in a single frequency network (SFN) via one or more RRHs of the one or more of the plurality of RRHs to enable the eNodeB to determine a mobility status of the UE according to the UL transmission signal ⟿ 720

Decode, at the UE, channel propagation conditions and mobility status in a downlink transmission signal received from the eNodeB ⟿ 730

FIG. 7

Mobile
Device

Multiple
Antennas

Wireless
Modem

Non-Volatile
Memory Port

Speaker

Liquid Crystal Display
(LCD) Screen and/or
Touch Screen Display

Speaker

Application
Processor

Storage
Medium

Graphics
Processor

Internal
Memory

Keyboard

Microphone

FIG. 8

FIG. 9

1000

Node 1010

Node Device
1012

1016

Transceiver
Module

Transceiver

Processor(s)

Memory

1014

Processing
Module

Processor(s)

Memory

Wireless
Device
1020

1022

Transceiver
Module

Transceiver

Processor(s)

Memory

1024

Processing
Module

Processor(s)

Memory

FIG. 10

REFERENCES CITED IN THE DESCRIPTION

**Non-patent literature cited in the description**

- *3rd Generation Partnership Project; Technical Specification Group Radio Access Network; Study on performance enhancements for high speed scenario in LTE (Release 13),* 07 January 2016

- LTE performance enhancement under high speed scenario. *3GPP Release 13*